# FASCICULE DE BREVET EUROPEEN

(11) **EP 2 819 257 B1**
(45) Date de publication et mention de la délivrance du brevet: **18.05.2016**
(21) Numéro de dépôt: 14305773.5
(22) Date de dépôt: 23.05.2014
(51) Int. Cl.: H02G 3/12, H02G 3/18

(54) **Appareillage électrique étendu**
Erweitertes Elektrogerät
Extensive electrical appliance

(30) Priorité: 28.06.2013 FR 1356328
(43) Date de publication de la demande: 31.12.2014
(73) Titulaire: Legrand France, 87000 Limoges (FR); Legrand SNC, 87000 Limoges (FR)
(72) Inventeur: Fauriot, Jacques, 87000 Limoges (FR)
(74) Mandataire: Orsini, Fabienne

(56) Documents cités:
- WO-A2-02/11266
- GB-A- 2 325 353
- US-A- 2 385 620
- US-A1- 2006 178 042

## Description

### DOMAINE TECHNIQUE AUQUEL SE RAPPORTE L'INVENTION

La présente invention concerne de manière générale les installations électriques de bâtiments, et plus précisément la rénovation de ces installations électriques.

Elle concerne plus particulièrement un appareillage électrique comportant deux mécanismes d'appareillages situés côte à côte, dont un premier mécanisme prévu pour s'engager dans une boîte d'encastrement et un second mécanisme prévu pour se placer à l'avant de la paroi, à distance de la boîte d'encastrement.

L'invention trouve une application particulièrement avantageuse dans la réalisation d'appareillages électriques dont le second mécanisme d'appareillage est un chargeur de téléphone avec ou sans enrouleur de câble, ou un support de téléphone avec chargeur intégré, ou un détecteur de présence, ou un ioniseur, ou encore une prise USB ...

### ARRIERE-PLAN TECHNOLOGIQUE

Généralement, une boîte électrique encastrée dans une paroi comporte des moyens pour recevoir un appareillage électrique ainsi que des opercules défonçables qui permettent d'ouvrir localement des passages pour les conducteurs électriques nécessaires à la desserte de cet appareillage électrique.

Une boîte électrique présente généralement une taille standard, par exemple avec un diamètre de 68 millimètres et une profondeur de 50 millimètres.

Le volume intérieur d'une telle boîte électrique est alors réduit et il n'est pas aisé de connecter les conducteurs électriques à l'appareillage électrique.

Ce faible volume intérieur restreint donc les possibilités d'évolution des appareillages électriques qui, en raison de leurs tailles limitées, ne peuvent alors pas intégrer de nouvelles fonctions.

La solution généralement utilisée pour loger des appareillages électriques remplissant deux fonctions différentes consiste alors à prévoir deux boîtes électriques l'une à côté de l'autre.

Cette solution s'avère toutefois fastidieuse à mettre en oeuvre lors des chantiers de rénovation, lorsque seule une boîte électrique monoposte est prévue dans la paroi. Pour cela, il est en effet nécessaire de changer la boîte électrique par une boîte double poste, ce qui nécessite des travaux importants.

On connaît alors du document US2006/0178042 un appareillage électrique tel que précité, comportant deux premiers mécanismes d'appareillage (des prises de courant) logés dans la boîte électrique et un second mécanisme d'appareillage (un circuit de communication réseau) logé dans la plaque d'habillage, en dehors de la boîte électrique, contre la paroi elle-même.

Cette solution, bien qu'efficace, présente un inconvénient majeur. Pour la commercialiser, il est en effet nécessaire de prévoir systématiquement, au prix d'une multiplication des références et donc au détriment des coûts de fabrication et de stockage, autant de plaques d'habillage que de fonctions électriques supplémentaires souhaitées (prise USB, ioniseur, ...) et de finitions souhaitées (cuir, aluminium brossé, plastique de couleur, ...).

On connaît par ailleurs du document US2385620 un appareillage électrique comportant, d'une part, un socle qui est fixé dans une boîte d'encastrement et qui loge deux prises de courant équipées chacune d'un enjoliveur, et, d'autre part, une plaque avant qui présente deux ouvertures pour l'accès aux deux enjoliveurs et qui porte une lampe d'éclairage.

On connaît aussi du document GB2325353 un appareillage électrique comportant deux mécanismes de prise de courant branchés en parallèle, dont l'un est logé dans une boîte d'encastrement et dont l'autre est situé à côté de la boîte, à l'avant de la paroi murale.

Dans ces deux documents, le mécanisme qui est situé à côté de la boîte ne comporte pas un enjoliveur standard, adapté à s'encliqueter sur le support d'appareillage.

### OBJET DE L'INVENTION

Afin de remédier à l'inconvénient précité de l'état de la technique, la présente invention propose un appareillage électrique qui est susceptible de recevoir une plaque d'habillage standard.

Plus particulièrement, on propose selon l'invention un appareillage électrique tel que défini dans la revendication 1.

L'enjoliveur et la plaque de finition forment donc deux pièces distinctes l'une de l'autre et distinctes de l'enjoliveur.

Ainsi, il est possible de prévoir un enjoliveur de forme adaptée à la fonction électrique supplémentaire souhaitée (prise USB, ioniseur, ...), et une plaque d'habillage standard présentant la finition souhaitée.

Par plaque d'habillage standard, on entend que la plaque d'habillage utilisée peut être choisie parmi celles déjà utilisées pour d'autres types d'appareillages électriques.

Il s'agit donc d'une plaque ayant une épaisseur constante sur la majeure partie de sa surface (sur au moins 75% de sa surface), et présentant une forme qui est indépendante de la fonction électrique des mécanismes d'appareillages. Cette plaque est par ailleurs distincte du support d'appareillage et de l'enjoliveur.

Pour illustrer le propos, on peut considérer que la boîte électrique en place dans la paroi est une boîte monoposte et que l'on souhaite y rapporter un appareillage électrique selon l'invention, comportant une prise de courant et une prise USB. Alors, la prise de courant se logera dans la boîte électrique monoposte tandis que la prise USB se placera à côté de la boîte électrique, à l'avant de la paroi. La plaque d'habillage utilisée pour border ces deux prises pourra alors être une plaque d'habillage telle que celle utilisée lorsqu'on installe deux prises de courant dans une boîte électrique double poste.

Il existe donc déjà une vaste gamme de plaques d'habillage utilisable en combinaison avec l'appareillage électrique selon l'invention, de sorte que l'utilisateur pourra profiter d'un large choix de références sans que cette offre ne vienne pour autant grever les coûts de stockage et de fabrication.

D'autres caractéristiques avantageuses et non limitatives de l'appareillage électrique conforme à l'invention sont définies dans es revendications 2 à 11.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un ensemble comprenant un appareillage électrique selon l'invention, une boîte électrique et une plaque d'habillage ;
- la figure 2 est une vue schématique en coupe de l'ensemble de la figure 1 ;
- la figure 3 est une vue schématique en perspective éclatée d'un premier mode de réalisation de l'ensemble de la figure 1 ;
- les figures 4 et 5 sont des vues schématiques en perspective assemblée de l'ensemble de la figure 3, représenté sous deux angles différents ; et
- la figure 6 est une vue schématique en perspective éclatée d'un second mode de réalisation de l'ensemble de la figure 1.

En préliminaire on notera que les éléments identiques ou similaires des différentes variantes et des différents modes de réalisation de l'invention représentés sur les différentes figures seront, dans la mesure du possible, référencés par les mêmes signes de référence et ne seront pas décrits à chaque fois.

Lors d'un chantier de rénovation, il peut arriver de vouloir remplacer un ancien appareillage électrique à N fonctions électriques par un nouvel appareillage électrique à N+1 fonctions électriques.

Ainsi, comme cela sera décrit en détail dans l'exemple exposé, il peut arriver de vouloir remplacer un ancien appareillage électrique à une fonction électrique (par exemple une prise de courant simple) par un nouvel appareillage électrique à deux fonctions électriques (par exemple une prise de courant simple et une prise USB).

Pour éviter d'avoir à remplacer l'ancienne boîte électrique monoposte par une nouvelle boîte électrique double-poste, la présente invention propose un nouvel appareillage électrique à deux fonctions, pouvant être monté sur l'ancienne boîte électrique monoposte.

Dans la description, les termes « avant » et « arrière » seront utilisés par rapport à la direction du regard de l'usager vers la paroi sur laquelle est rapporté l'appareillage électrique selon l'invention. Par exemple, lorsque la paroi sera une cloison murale d'une pièce, l'avant désignera le côté tourné vers l'intérieur de la pièce et l'arrière désignera le côté tourné vers l'extérieur de la pièce.

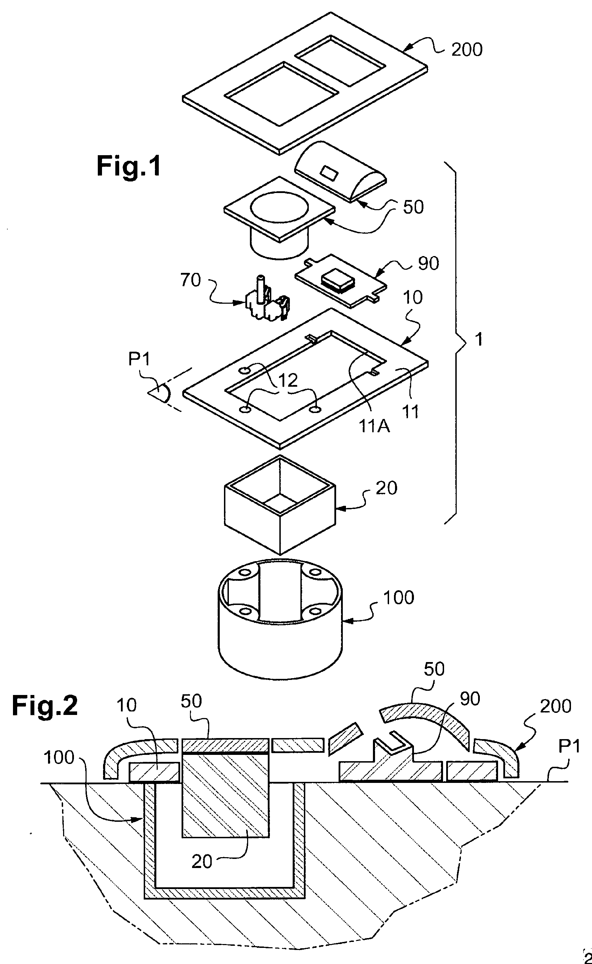

Sur les figures 1, 3, 5 et 6, on a représenté une boîte électrique 100 monoposte, du type de celle que l'on peut trouver sur un chantier de rénovation.

Cette boîte électrique 100 est ici une boîte d'encastrement en ce sens qu'elle est prévue pour être encastrée dans une paroi. Elle est ici plus précisément prévue pour être encastrée au travers d'une ouverture circulaire pratiquée dans un panneau de plâtre d'une cloison creuse.

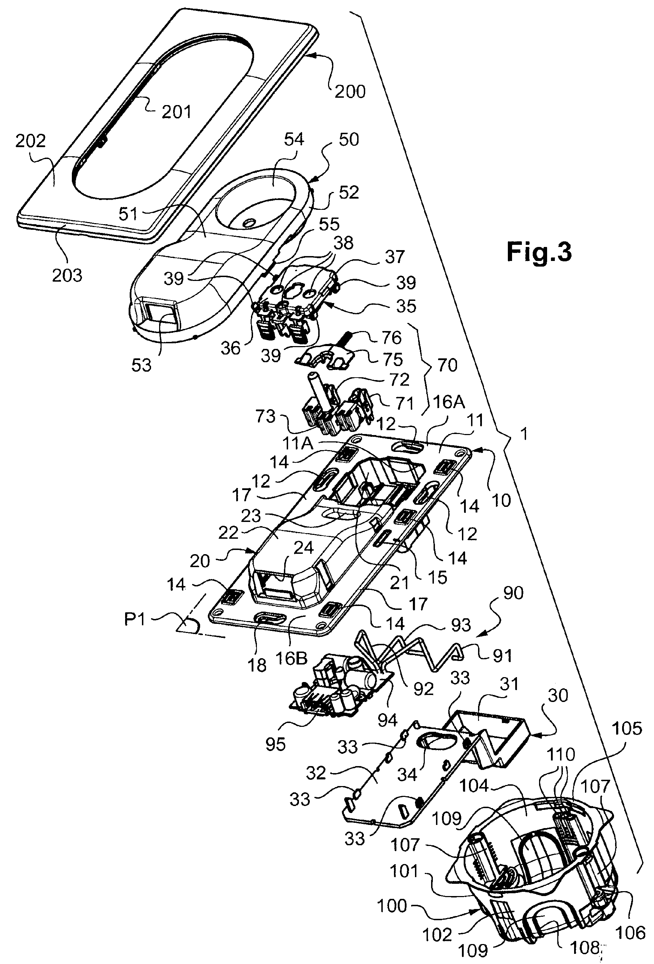

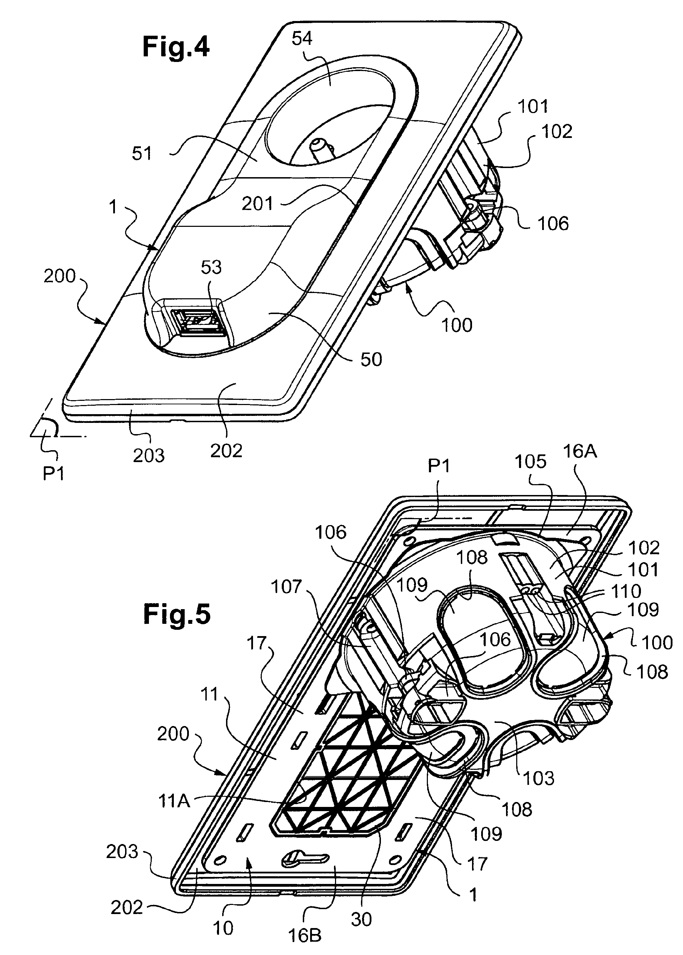

Comme le montrent mieux les figures 3 et 5, elle comprend un corps 101 qui présente ici une forme générale cylindrique mais qui pourrait bien entendu présenter une forme différente, notamment parallélépipédique.

Ce corps 101 comporte une paroi latérale 102 tubulaire de révolution, qui est fermée à l'arrière par une paroi de fond 103 et qui est ouverte vers l'avant. Le corps 101 délimite ainsi un logement intérieur 104.

Pour sa fixation dans l'ouverture circulaire pratiquée dans le panneau de plâtre, le corps 101 de la boîte électrique 100 comporte un trottoir extérieur 105 qui longe extérieurement le bord de l'ouverture avant de la paroi latérale 102 et qui est adapté à prendre appui contre la face avant du panneau de plâtre, tout autour de l'ouverture circulaire. Ainsi, ce trottoir extérieur 105 permet de bloquer le corps 101 de la boîte électrique 100 vers l'arrière.

Pour le bloquer vers l'avant, la boîte électrique 100 comprend deux griffes 106 qui interviennent en position diamétralement opposée sur la face externe de la paroi latérale 102 du corps 101, et qui, sous le contrôle de vis (non représentées) engagées dans des renfoncements 107 de la paroi latérale 102, pourront venir s'accrocher à la face arrière du panneau de plâtre.

Pour permettre d'engager une gaine de cheminement de câbles (qui loge des fils électriques issus du réseau électrique local) à l'intérieur de la boîte électrique 100, le corps 101 présente quatre ouvertures de passage 108 qui s'étendent chacune à cheval sur la paroi latérale 102 et sur la paroi de fond 103 du corps 101, suivant un contour oblong. Ces ouvertures de passage 108 sont initialement fermées par des opercules défonçables 109, qui viennent de formation avec le reste du corps 101, par moulage d'une matière isolante.

Le nouvel appareillage électrique 1 à loger dans cette boîte électrique 100 est représenté très schématiquement sur la figure 1.

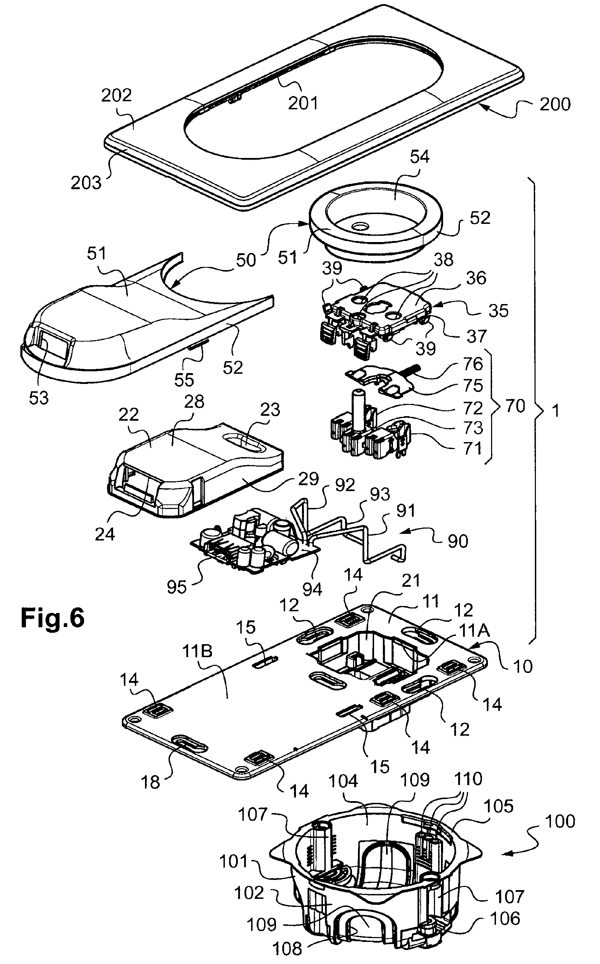

On a représenté deux modes de réalisation détaillés de ce nouvel appareillage électrique 1 sur les figures 3 et 6.

Comme le montre cette figure 1, selon l'invention, cet appareillage électrique 1 comporte :
- un support d'appareillage 10 qui comprend, d'une part, un cadre 11 délimitant une ouverture 11A, et, d'autre part, des moyens de fixation 12 du cadre 11 sur une boîte électrique 100 selon un plan d'appui P1,
- au moins deux mécanismes d'appareillages 70, 90 situés côte à côte, dont un premier mécanisme d'appareillage 70 situé au travers de l'ouverture 11A du cadre 11, au moins partiellement à l'arrière dudit plan d'appui P1, et un second mécanisme d'appareillage 90 situé en saillie exclusivement à l'avant dudit plan d'appui P1,
- au moins un enjoliveur 50 (ici deux), fixé(s) à l'avant des deux mécanismes d'appareillages 70, 90 et dont la ou les forme(s) défini(ssen)t pour l'utilisateur la fonction électrique de chaque mécanisme d'appareillage 70, 90, et
- des moyens d'assujettissement 14 d'une plaque de finition 200 autour du ou des enjoliveurs 50, à l'avant dudit support d'appareillage 10.

Tel que représenté très schématiquement sur la figure 1, l'un des mécanismes d'appareillage 90 comporte un socle plat à rapporter dans l'ouverture 11 A du cadre 11 du support d'appareillage 10, et des composants électriques fixés à l'avant de ce socle plat. L'autre mécanisme d'appareillage 70 est quant à lui prévu pour être logé dans un socle 20 en forme de boîte fixée dans l'ouverture 11A du cadre 11 du support d'appareillage 10.

Comme le montre la figure 2, une fois le support d'appareillage 10 fixé à la boîte électrique 100 et une fois la plaque d'habillage 200 rapportée sur le support d'appareillage 10, le socle 20 se loge dans la boîte électrique 100 tandis que le mécanisme d'appareillage 90 se place naturellement contre la paroi, à distance de la boîte électrique 100. L'installation de ce second mécanisme d'appareillage 90 ne nécessite donc aucun aménagement particulier dans la paroi.

Le premier mode de réalisation détaillé de l'invention est représenté sur les figures 3 à 5.

Comme le montre la figure 3, le support d'appareillage 10 sert au montage de cet appareillage électrique 1 à l'intérieur de la boîte électrique 100.

Le cadre 11 de ce support d'appareillage 10 présente ici une forme rectangulaire, avec deux petites branches 16A, 16B opposées et deux grandes branches 17 opposées qui délimitent ensemble l'ouverture 11A de forme rectangulaire.

Ce cadre 11 est adapté à s'appliquer par sa face arrière contre la face avant du trottoir extérieur 105 de la boîte électrique 100 et contre la face avant de la paroi dans laquelle est encastrée la boîte électrique 100.

La face arrière de ce cadre 11 est à cet effet plane et définit ainsi le plan d'appui P1.

Les moyens de fixation du cadre 11 sur la boîte électrique 100 sont ici formés par des orifices 12 en forme de trous de serrure. De tels orifices 12 sont bien connus de l'Homme du métier et ne seront pas décrits en détail. Les bords de ces orifices 12 forment des appuis pour des têtes de vis de fixation, ces vis de fixation étant préalablement vissées dans des puits de vissage 110 que porte intérieurement la paroi latérale 102 du corps 101 de la boîte 100.

Un orifice 12 est prévu dans une première des petites branches 16A du cadre 11, au centre de celle-ci. Deux autres orifices 12 sont respectivement prévus dans les deux grandes branches 17 du cadre 11, du côté de la première petite branche 16A.

En pratique, on pourra utiliser ces deux orifices 12 pour fixer le support d'appareillage 10 à la boîte électrique 100 au moyen desdites vis de fixation.

On observe sur la figure 3 que la seconde des petites branches 16B présente également en son centre un orifice 18 en forme de trou de serrure. On pourra ainsi utiliser les orifices 12, 18 des petites branches 16A, 16B du cadre 11 pour fixer le support d'appareillage 10 à une boîte double-poste lorsqu'une telle boîte électrique sera disponible.

Comme cela a été exposé supra, deux mécanismes d'appareillage 70, 90 sont bloqués dans le support d'appareillage 10.

Le premier mécanisme d'appareillage 70 pourrait être de tout type. Il pourrait ainsi s'agir d'un mécanisme d'interrupteur, de va-et-vient, de variateur électrique, de prise réseau (RJ45), de prise de téléphone (RJ11), de voyant, ou encore de détecteur (de fumée, d'inondation, de température, de mouvement ou de lumière).

Tel qu'il est représenté sur la figure 3, il s'agit ici d'un mécanisme de prise de courant 70 qui comporte trois bornes électriques de phase 71, de neutre 72, et de terre 73. Telles que représentées sur la figure 3, les bornes électriques de phase 71 et de neutre 72 délimitent chacune un alvéole de réception d'une broche de la fiche électrique, tandis que la borne de terre 73 comporte une broche à engager dans un alvéole de réception de la fiche électrique.

Chacune de ces bornes électriques 71, 72, 73 comporte par ailleurs, à l'arrière, des moyens de connexion (non visibles) à l'un des fils électriques issus du réseau électrique local.

Le mécanisme de prise de courant 70 comporte également un obturateur 75 monté mobile en translation à l'avant des bornes de phase 71 et de neutre 72, entre une position fermée dans laquelle il interdit l'accès à ces bornes et une position ouverte dans laquelle il libère cet accès. Un tel obturateur 75 est bien connu de l'Homme du métier et ne sera pas décrit ici plus en détail. Il est rappelé en position fermée par un ressort de compression 76.

Ce mécanisme de prise de courant 70 est ici bloqué sur le support d'appareillage 10 entre les deux orifices 12 des grandes branches 17 du cadre 11 du support d'appareillage 10, du côté de la première petite branche 16A du cadre.

Le second mécanisme d'appareillage 90 est préférentiellement d'un type différent du premier mécanisme d'appareillage 70. Il est notamment choisi pour être moins encombrant que ce dernier puisque, contrairement au premier mécanisme d'appareillage 70, il n'est pas prévu pour être logé dans la boîte électrique 100 mais pour être rapporté contre la face avant de la paroi, à côté de la boîte électrique 100 (voir figures 4 et 5).

Il pourrait ainsi s'agir d'un chargeur de téléphone avec ou sans enrouleur de câble, d'un détecteur de présence, ou encore d'un ioniseur. Tel qu'il est représenté sur la figure 3, il s'agit ici d'un mécanisme de prise USB 90.

Comme le montre la figure 3, le mécanisme de prise USB 90 comprend un circuit imprimé 94 qui porte en face avant divers composants électriques, ainsi qu'un connecteur USB 95 formant un puits de réception d'une fiche USB. Ici, ce connecteur USB 95 s'ouvre latéralement, à l'opposé du mécanisme de prise de courant 70.

Pour son alimentation en courant électrique, ce mécanisme de prise USB 90 comporte trois fils électriques 91, 92, 93 qui sont respectivement connectés aux trois bornes de phase 71, de neutre 72 et de terre 73 du mécanisme de prise de courant 70.

Ce mécanisme de prise USB 90 est ici bloqué sur le support d'appareillage 10 à distance de la première petite branche 16A du cadre 11, de manière décalée par rapport aux deux orifices 12 des grandes branches 17. Il est ainsi placé du côté de la seconde petite branche 16B, à côté du mécanisme de prise de courant 70.

Les deux mécanismes de prise de courant 70 et de prise USB 90 sont logés dans un socle d'appareillage 20, 30, 35 qui est bloqué dans l'ouverture 11A du cadre 11.

Ce socle d'appareillage comporte une partie fixe 20 qui vient de formation avec le support d'appareillage 10 (par moulage d'une matière plastique), et deux parties amovibles 30, 35 qui comprennent des moyens de blocage sur la partie fixe 20.

La partie fixe 20 obture entièrement l'ouverture 11A du cadre 11. Elle présente deux côtés distincts respectivement prévus pour loger les deux mécanismes de prise de courant 70 et de prise USB 90.

Ainsi, une petite moitié de la partie fixe 20 située du côté de la première petite branche 16A du cadre 11 forme un renfoncement 21 par rapport au cadre 11 qui permet de loger le mécanisme de prise de courant 70.

Le fond de ce renfoncement 21 forme notamment trois logements pour les bornes électriques de phase 71, de neutre 72 et de terre 73. Il délimite également une glissière sur laquelle peut coulisser l'obturateur 75 entre sa position ouverte et sa position fermée.

Le reste de cette partie fixe 20, qui est situé du côté de la seconde petite branche 16B du cadre 11, forme un renflement 22 par rapport au cadre 11 qui permet de loger le mécanisme de prise USB 90.

On observe sur la figure 3 que ce renflement 22 présente une cavité 23 en forme de haricot qui définit, au niveau de son fond, un orifice en forme de trou de serrure (non visible) permettant, en combinaison avec l'orifice 12 de la première petite branche 16A du cadre 11, de fixer le support d'appareillage 10 sur la boîte électrique 100.

En résumé, deux des orifices 12 du cadre 11 permettent de fixer le support d'appareillage 10 sur la boîte électrique 100 dans une première position (par exemple verticale), tandis que la cavité 23 et l'orifice 12 correspondant permettent la fixation du support d'appareillage 10 sur la boîte électrique 100 dans une seconde position (horizontale) distincte de la première position.

On observe également que ce renflement 22 présente, du côté de la seconde petite branche 16B du cadre 11, une ouverture rectangulaire 24 pour permettre le passage d'une fiche USB dans le connecteur USB 95 du mécanisme de prise USB 90.

Pour bloquer le mécanisme de prise USB 90 à l'intérieur du renflement 22, une première des parties amovibles 30 est prévue pour se fixer à l'arrière de la partie fixe 20.

Cette première partie amovible 30 comporte un bac 31 parallélépipédique ouvert vers l'avant, qui est prévu pour se fixer à l'arrière du renfoncement 21, afin notamment de protéger la connexion des fils électriques 91, 92, 93 aux bornes électriques 71, 72, 73.

Cette première partie amovible 30 comporte également une plate-forme 32 qui s'étend à partir d'un bord surélevé du bac 31, à l'opposé de celui-ci, dans un plan parallèle à celui du fond du bac 31. Cette plate-forme 32 est prévue pour se placer à l'arrière du renflement 22 de telle sorte que sa face arrière s'étende dans le plan d'appui P1 et que sa face avant ferme le logement du mécanisme de prise USB 90.

Les moyens de blocage de cette première partie amovible 30 sur le support d'appareillage 10 comportent ici quatre dents d'encliquetage 33 qui s'élèvent par paires à partir des deux bords longitudinaux opposés de la face avant de la plate-forme 32. Ces dents d'encliquetage 33 sont conçues pour s'accrocher à des nervures prévues en correspondance sur la face intérieure du renflement 22.

Comme le montre bien la figure 3, la plate-forme 32 présente une ouverture 34 en forme de haricot pour le passage de la vis de fixation engagée au travers de la cavité 23 prévue dans le renflement 22.

La seconde partie amovible 35 du socle d'appareillage est conçue pour bloquer les bornes électriques 71, 72, 73 dans leurs logements et pour maintenir l'obturateur 75 en appui contre la glissière formée au fond du renfoncement 21.

Cette seconde partie amovible 35 comporte une paroi frontale 36 carrée qui s'étend parallèlement au fond du renfoncement 21, et un bord tombant 37 qui borde cette paroi frontale 36.

Cette paroi frontale 36 et ce bord tombant 37 forment un logement pour l'obturateur 75.

La paroi frontale 36 présente trois ouvertures 38 pour le passage de la broche de la borne de terre 73 et pour le passage des broches de la fiche électrique à engager dans les alvéoles des bornes de phase 71 et de neutre 72.

Cette seconde partie amovible 35 comporte par ailleurs des moyens de blocage dans le renfoncement 21.

Ces moyens de blocage sont ici formés par quatre crochets anti-arrachement 39 situés aux quatre coins du bord tombant 37, qui sont repliés en U vers l'avant pour coopérer par encliquetage avec des nervures prévues sur des montants qui s'élèvent à partir du fond du renfoncement 21.

Les parties amovibles 30, 35 du socle d'appareillage sont ici chacunes réalisées d'une seule pièce, par moulage d'une matière plastique.

Comme le montrent les figures 3 et 4, l'enjoliveur 50 est prévu pour recouvrir le socle d'appareillage 20, 30, 35 et pour conférer à chaque mécanisme d'appareillage 70, 90 une fonction électrique. Il présente en effet une forme qui permet aux mécanismes de prise de courant 70 et de prise USB d'assurer correctement les fonctions électriques pour lesquelles ils ont été conçus.

L'enjoliveur 50 comporte une paroi frontale 51 bordée à l'arrière par un bord tombant 52 qui s'étend suivant un contour extérieur oblong de format standard. Bien entendu, ce contour pourrait présenter une forme différente, par exemple rectangulaire.

La tranche arrière de ce bord tombant 52 est plane et s'appuie contre la face avant du cadre 11 du support d'appareillage 10.

La paroi frontale 51 est surélevée sur un de ses côtés, celui situé du côté de la seconde petite branche 16B du cadre 11, pour recouvrir le renflement 22 sans interférer avec celui-ci.

L'extrémité de ce côté surélevé de la paroi frontale 51 présente une ouverture de passage 53 située dans l'axe de l'ouverture de passage 24 pratiquée dans le renflement 22, pour le passage d'une fiche USB.

L'autre côté de la paroi frontale 51 présente un renfoncement qui forme un puits cylindrique 54 d'insertion d'une fiche électrique.

Le fond de ce puits cylindrique 54 présente trois ouvertures pour le passage de la broche de la borne de terre 73 et pour le passage des broches de la fiche électrique à engager dans les alvéoles des bornes de phase 71 et de neutre 72.

Pour sa fixation au support d'appareillage 10, l'enjoliveur 50 comporte deux pattes d'encliquetage 55 qui s'étendent dans le prolongement de son bord tombant 52, à l'opposé l'une de l'autre, et qui sont prévues pour passer au travers de fentes 15 situées au centre des deux grandes branches 17 du cadre 11 afin de s'accrocher à la face arrière de ce dernier.

Cet enjoliveur 50 est ici entièrement en matière isolante. Il est plus précisément réalisé d'une seule pièce, par moulage d'une matière plastique.

Le contour de l'enjoliveur 50 est normé en ce sens qu'il présente une forme identique à celle déjà utilisée sur des enjoliveurs d'appareillages électriques à double poste.

Ainsi, grâce à l'invention, il est possible d'utiliser sur l'appareillage électrique 1 une plaque d'habillage 200 qu'on trouve déjà dans le commerce, par exemple sous la référence LEGRAND 068945.

Comme le montre la figure 3, la plaque d'habillage 200 présente une forme rectangulaire. Elle comporte une ouverture centrale 201 de forme oblongue et de taille identique, au jeu près, à celle du contour de l'enjoliveur 50.

Tandis que cette plaque d'habillage 200 est conçue pour recouvrir esthétiquement le support d'appareillage 10, l'ouverture centrale 201 est conçue pour border l'enjoliveur 50 afin de laisser accès au puits cylindrique 54 et à l'ouverture de passage 53.

Cette plaque d'habillage 200 présente une paroi avant 202 plane, bordée par un rebord arrière 203. La paroi avant 202 de la plaque d'habillage 200 est adaptée à s'appuyer par sa face arrière contre la face avant du cadre 11 du support d'appareillage 10. Le rebord arrière 203 est quant à lui adapté à recouvrir la tranche du cadre 11 du support d'appareillage 10 pour s'appliquer contre la paroi.

Cette plaque d'habillage 200 comporte des languettes d'encliquetage (non visibles) qui s'étendent à partir de la face arrière de sa paroi avant 202 et qui sont adaptées à s'accrocher dans les fentes 14 prévues en correspondance dans les grandes branches 17 du cadre 11 du support d'appareillage 10.

Le second mode de réalisation détaillé de l'invention est représenté sur la figure 6.

Sur cette figure, la boîte électrique 100, la plaque d'habillage 200, le mécanisme de prise de courant 70, le mécanisme de prise USB 90 et la seconde partie amovible 35 du socle d'appareillage sont identiques à ceux représentés sur la figure 3.

Le support d'appareillage 10 présente quant à lui une forme différente de celle du support d'appareillage représenté sur la figure 3.

En pratique, ce support d'appareillage 10 ne se distingue de celui-ci que par une seule caractéristique, celle selon laquelle il est prévu en lieu et place du renflement (22) une paroi plane 11 B. Dans ce mode de réalisation, l'ouverture 11 A du cadre 11 présente alors une taille réduite permettant seulement d'engager le mécanisme de prise de courant 70 dans le renfoncement 21.

La paroi plane 11 B sert alors de support arrière pour le mécanisme de prise USB 90. Les trois fils électriques 91, 92, 93 d'alimentation en courant électrique du mécanisme de prise USB 90 sont par conséquent tirés le long de la face avant de cette paroi plane 11 B puis engagés dans le renfoncement 21 pour être connectés aux trois bornes de phase 71, de neutre 72 et de terre 73 du mécanisme de prise de courant 70.

Dans ce mode de réalisation, le socle d'appareillage comporte une partie fixe (formée du renfoncement 21 et de la paroi plane 11 B) et deux parties amovibles 22, 35 qui comprennent chacune des moyens de blocage sur le support d'appareillage 10.

La première partie amovible 22 présente une forme identique à celle du renflement du support d'appareillage représenté sur la figure 3. Elle permet de loger le mécanisme de prise USB 90 pour le bloquer contre la paroi plane 11 B.

Cette première partie amovible 22 comporte à cet effet une paroi frontale 28 bordée à l'arrière par un rebord 29 dont la tranche arrière est prévue pour s'appliquer contre la paroi plane 11 B.

Il est alors prévu, en creux dans la paroi frontale 28, une cavité 23 en forme de haricot qui laisse accès à l'un des orifices en forme de trou de serrure du support d'appareillage 10. Il est également prévu une ouverture rectangulaire 24 pour permettre le passage d'une fiche USB dans le connecteur USB 95 du mécanisme de prise USB 90.

Pour bloquer cette première partie amovible 22 sur la paroi plane 11 B, on pourrait prévoir des pattes d'encliquetage adaptées à s'encliqueter dans des fentes prévues à cet effet dans la paroi plane du cadre. Toutefois, ici, la première partie amovible 22 est fixée par soudure (thermiquement, par ultrasons ou par collage) contre la face avant de la paroi plane 11 B.

Comme le montre la figure 6, dans ce mode de réalisation, il est prévu deux enjoliveurs 50 chacun adaptés à recouvrir l'un des mécanismes de prise de courant 70 et de prise USB 90.

Les formes de ces enjoliveurs 50 sont ici prévues de telle manière qu'une fois assemblés, la combinaison des deux enjoliveurs 50 présente une forme identique à celle de l'enjoliveur de la figure 3.

Chacun de ces enjoliveurs 50 comporte une paroi frontale 51 bordée à l'arrière par un bord tombant 52.

L'un de ces enjoliveurs présente alors une forme de puits, avec une paroi frontale 51 annulaire et plane qui est bordée à l'extérieur par un bord tombant 52 cylindrique et qui présente en son centre un puits cylindrique 54 d'insertion d'une fiche électrique.

Pour sa fixation au support d'appareillage 10, cet enjoliveur 50 comporte sur la face externe de son puits cylindrique 54 des crans (non visibles) adaptés à s'accrocher au bord de l'ouverture 11A du cadre 11.

Cet enjoliveur 50 se trouve déjà dans le commerce, par exemple sous la référence LEGRAND 068111, ce qui permet de réaliser des économies d'échelle.

L'autre de ces enjoliveurs 50 forme un capot adapté à recouvrir la première partie amovible 22 du support d'appareillage, sans interférer avec celle-ci.

Pour sa fixation au support d'appareillage 10, cet autre enjoliveur 50 comporte deux pattes d'encliquetage 55 qui s'étendent dans le prolongement de son bord tombant 52 et qui sont prévues pour passer au travers de fentes 15 prévues dans le cadre 11.

La présente invention n'est nullement limitée aux modes de réalisation décrits et représentés, mais l'homme du métier saura y apporter toute variante conforme à son esprit.

On pourrait ainsi prévoir, lors d'un chantier de rénovation, de remplacer un ancien appareillage électrique à N fonctions (N étant un entier naturel supérieur ou égal à 2) par un nouvel appareillage électrique à N+N' fonctions (N' étant un entier naturel supérieur ou égal à 1), sans changer de boîte électrique.

A titre d'exemple, on pourrait remplacer un ancien appareillage comprenant deux prises de courant logées dans une boîte électrique double poste, par un nouvel appareillage comprenant deux prises de courant et deux prises USB situées de part et d'autre des deux prises de courant, sans changer la boîte électrique.

Selon une autre variante non représentée de l'invention, on pourrait prévoir que l'enjoliveur forme un support permettant d'y poser un téléphone portable. Dans cette variante, le second mécanisme d'appareillage pourra comporter soit une fiche électrique sur laquelle on branchera directement le téléphone portable, soit un enrouleur comportant un câble électrique et une fiche électrique à brancher au téléphone portable avant de le déposer sur le support.

Selon une autre variante de l'invention non représentée sur les figures, on pourrait prévoir que l'appareillage électrique présente une forme identique à celle de l'appareillage représenté sur la figure 6, à l'exception de l'enjoliveur qui sera formé d'une seule pièce.

## Revendications

1. Appareillage électrique (1) comportant :
- un support d'appareillage (10) qui comprend, d'une part, un cadre (11) délimitant une ouverture (11A), et, d'autre part, des moyens de fixation (12) du cadre (11) sur une boîte électrique (100) selon un plan d'appui (P1),
- au moins deux mécanismes d'appareillages (70, 90) situés côte à côte, dont au moins un premier mécanisme d'appareillage (70) qui s'étend au travers de l'ouverture (11A) du cadre (11), majoritairement à l'arrière dudit plan d'appui (P1), et au moins un second mécanisme d'appareillage (90) qui s'étend exclusivement à l'avant dudit plan d'appui (P1),
- au moins un enjoliveur (50) situé à l'avant des deux mécanismes d'appareillages (70, 90) et dont la forme définit pour l'utilisateur la fonction électrique de chaque mécanisme d'appareillage (70, 90), et
- des moyens d'assujettissement (14) d'une plaque de finition (200) autour dudit enjoliveur (50), à l'avant dudit plan d'appui (P1) **caracterisé par** chaque enjoliveur (50) comportant des moyens de fixation (55) audit support d'appareillage (10).

2. Appareillage électrique (1) selon la revendication précédente, dans lequel, lesdits moyens de fixation comportant au moins deux ouvertures (12) de passage de vis de fixation situées à l'opposé l'une de l'autre sur le cadre (11), ledit premier mécanisme d'appareillage (70) est centré entre les deux ouvertures (12) et le second mécanisme d'appareillage (90) est décalé par rapport aux deux ouvertures (12).

3. Appareillage électrique (1) selon l'une des revendications précédentes, dans lequel l'ouverture (11A) du cadre (11) est obturée par un socle d'appareillage (20, 30, 35) qui loge lesdits mécanismes d'appareillages (70, 90).

4. Appareillage électrique (1) selon la revendication précédente, dans lequel ledit socle d'appareillage comporte une partie fixe (20) qui vient de formation avec ledit support d'appareillage (10).

5. Appareillage électrique (1) selon la revendication précédente, dans lequel ladite partie fixe (20) comporte une portion arrière (21) en creux par rapport au plan d'appui (P1) qui loge ledit premier mécanisme d'appareillage (70), et une partie avant (22) bombée en saillie à l'avant dudit plan d'appui (P1) qui loge ledit second mécanisme d'appareillage (90).

6. Appareillage électrique (1) selon l'une des revendications 3 à 5, dans lequel ledit socle d'appareillage comporte une partie amovible (30) qui comprend des moyens de blocage (33) sur ledit support d'appareillage (10).

7. Appareillage électrique (1) selon la revendication précédente, dans lequel ladite partie amovible (30) comporte une portion plane (32) dont la face arrière s'étend dans le plan d'appui (P1), à l'arrière dudit second mécanisme d'appareillage (90).

8. Appareillage électrique (1) selon l'une des revendications précédentes, dans lequel ledit enjoliveur (50) est entièrement en matière isolante.

9. Appareillage électrique (1) selon l'une des revendications précédentes, dans lequel ledit enjoliveur (50) présente un contour extérieur oblong de format standard.

10. Appareillage électrique (1) selon l'une des revendications précédentes, dans lequel ledit enjoliveur (50) est formé d'une seule pièce.

## Patentansprüche

1. Elektrogerät (1), umfassend:
- eine Gerätehalterung (10), die einerseits einen Rahmen (11) umfasst, der eine Öffnung (11A) abgrenzt, und andererseits Mittel (12) zum Befestigen des Rahmens (11) gemäß einer Auflageebene (P1) auf einer Steckdose (100),
- mindestens zwei nebeneinanderliegende Gerätemechanismen (70, 90), von denen sich mindestens ein erster Gerätemechanismus (70) durch die Öffnung (11A) des Rahmens (11), hauptsächlich hinter der Auflageebene(P1) erstreckt, und mindestens ein zweiter Gerätemechanismus (90), der sich ausschließlich vor der Auflageebene (P1) erstreckt,
- mindestens eine, vor den beiden Gerätemechanismen (70, 90) gelegene Abdeckblende (50), deren Form für den Anwender die elektrische Funktion jedes Gerätemechanismus (70, 90) definiert, und
- Mittel zum Festmachen (14) einer Abdeckplatte (200) um die Abdeckblende (50) vor der Auflageebene (P1), **dadurch gekennzeichnet, dass** jede Abdeckblende (50) Mittel zum Befestigen (55) an der Gerätehalterung (10) umfasst.

2. Elektrogerät (1) nach vorausgehendem Anspruch, bei dem diese Befestigungsmittel mindestens zwei Durchgangsöffnungen (12) für Befestigungsschrauben umfassen, die gegenüberliegend und beidseitig auf dem Rahmen (11) angeordnet sind, und bei dem der erste Gerätemechanismus (70) mittig zwischen den beiden Öffnungen (12) angeordnet ist und der zweite Gerätemechanismus (90) in Bezug zu den beiden Öffnungen (12) versetzt ist.

3. Elektrogerät (1) nach einem der vorausgehenden Ansprüche, bei dem die Öffnung (11A) des Rahmens (11) durch einen Gerätesockel (20, 30, 35), der diese Gerätemechanismen (70, 90) aufnimmt, verschlossen ist.

4. Elektrogerät (1) nach vorausgehendem Anspruch, bei dem dieser Gerätesockel einen festen Abschnitt (20) umfasst, der zusammen mit der Gerätehalterung (10) ausgebildet ist.

5. Elektrogerät (1) nach vorausgehendem Anspruch, bei dem der feste Abschnitt (20) einen in Bezug zur Auflageebene (P1) eingesenkten hinteren Bereich (21) umfasst, der den ersten Gerätemechanismus (70) aufnimmt, und vor der Auflageebene (P1) einen wegstehenden, gewölbten vorderen Bereich (22) umfasst, der den zweiten Gerätemechanismus (90) aufnimmt.

6. Elektrogerät (1) nach einem der Ansprüche 3 bis 5, bei dem der Gerätesockel einen abnehmbaren Abschnitt (30) umfasst, der die Mittel (33) zum Festspannen auf der Gerätehalterung (10) enthält.

7. Elektrogerät (1) nach vorausgehendem Anspruch, bei dem der abnehmbare Abschnitt (30) einen ebenen Bereich (32) umfasst, dessen Rückseite sich in der Auflageebene (P1) hinter dem zweiten Gerätemechanismus (90) erstreckt.

8. Elektrogerät (1) nach einem der vorausgehenden Ansprüche, bei dem die komplette Abdeckblende (50) aus einem isolierenden Werkstoff ist.

9. Elektrogerät (1) nach einem der vorausgehenden Ansprüche, bei dem die Abdeckblende (50) eine längliche Außenkontur mit einem Standardformat aufweist.

10. Elektrogerät (1) nach einem der vorausgehenden Ansprüche, bei dem die Abdeckblende (50) aus einem einzigen Stück gefertigt ist.

## Claims

1. An electrical accessory (1) comprising:
• an accessory support (10) that comprises firstly a frame (11) defining an opening (11A), and secondly fastener means (12) for fastening the frame (11) on an electrical box (100) in a bearing plane (P1);
• at least two accessory mechanisms (70, 90) that are situated side by side, and including at least a first accessory mechanism (70) that extends through the opening (11A) of the frame (11) and lies mainly behind said bearing plane (P1), and at least a second accessory mechanism (90) that extends exclusively in front of said bearing plane (P1);
• at least one trim plate (50) that is situated in front of the two accessory mechanisms (70, 90) and having a shape that defines, for the user, the electrical function of each accessory mechanism (70, 90); and
• securing means (14) for securing a finishing plate (200) around said trim plate (50), in front of said bearing plane (P1);
the electrical accessory being **characterized by** each trim plate (50) including fastener means (55) for fastening to said accessory support (10).

2. An electrical accessory (1) according to the preceding claim, wherein said fastener means include at least two openings (12) for passing fastener screws, which openings are situated opposite each other on the frame (11), said first accessory mechanism (70) is centered between the two openings (12), and the second accessory mechanism (90) is offset relative to the two openings (12).

3. An electrical accessory (1) according to any preceding claim, wherein the opening (11A) of the frame (11) is closed by an accessory base (20, 30, 35) that houses said accessory mechanisms (70, 90).

4. An electrical accessory (1) according to the preceding claim, wherein said accessory base includes a stationary portion (20) that is formed integrally with said accessory support (10).

5. An electrical accessory (1) according to the preceding claim, wherein said stationary portion (20) comprises a rear portion (21) that is recessed relative to the bearing plane (P1) and that houses said first accessory mechanism (70), and a front portion (22) that is convex, projecting in front of said bearing plane (P1) and that houses said second accessory mechanism (90).

6. An electrical accessory (1) according to any one of claims 3 to 5, wherein said accessory base includes a removable portion (30) that includes blocking means (33) for blocking said accessory support (10).

7. An electrical accessory (1) according to the preceding claim, wherein said removable portion (30) includes a plane portion (32) having a rear face that extends in the bearing plane (P1), behind said second accessory mechanism (90).

8. An electrical accessory (1) according to any preceding claim, wherein said trim plate (50) is made entirely out of insulating material.

9. An electrical accessory (1) according to any preceding claim, wherein said trim plate (50) presents an oblong outline of standard format.

10. An electrical accessory (1) according to any preceding claim, wherein said trim plate (50) is formed as a single piece.
